**Europäisches Patentamt**

**European Patent Office**

**Office européen des brevets**

(19)

(11) Publication number : **0 378 978 B1**

(12) **EUROPEAN PATENT SPECIFICATION**

(45) Date of publication of patent specification :
01.09.93 Bulletin 93/35

(51) Int. Cl.⁵ : **F16H 1/32**

(21) Application number : **89850392.5**

(22) Date of filing : **10.11.89**

(54) **A gear transmission.**

The file contains technical information
submitted after the application was filed and
not included in this specification

(30) Priority : **18.01.89 SE 8900165**

(43) Date of publication of application :
**25.07.90 Bulletin 90/30**

(45) Publication of the grant of the patent :
**01.09.93 Bulletin 93/35**

(84) Designated Contracting States :
**DE FR GB IT**

(56) References cited :
**GB-A- 2 011 016**
**GB-A- 2 017 255**

(56) References cited :
**US-A- 3 532 005**
**PATENT ABSTRACTS OF JAPAN vol. 7, no.
240 (M-251)(1385) 25 October 1983, & JP-A-58
128549 (NICHIMEN) 01 August 1983**
**PATENT ABSTRACTS OF JAPAN vol. 9, no.
333 (M-443)(2056) 27 December 1985, & JP-
A-60 164044 (BUICHI NAKAMURA) 27 August
1985**

(73) Proprietor : **Nilsson, Sven W.**
**Fölstigen 5**
**S-433 41 Partille (SE)**

(72) Inventor : **Nilsson, Sven W.**
**Fölstigen 5**
**S-43341 Partille (SE)**

(74) Representative : **Forsberg, Lars-Ake**
**SKF NOVA AB Patent Department**
**S-415 50 Göteborg (SE)**

EP 0 378 978 B1

Note : Within nine months from the publication of the mention of the grant of the European patent, any
person may give notice to the European Patent Office of opposition to the European patent granted.
Notice of opposition shall be filed in a written reasoned statement. It shall not be deemed to have been
filed until the opposition fee has been paid (Art. 99(1) European patent convention).

Jouve, 18, rue Saint-Denis, 75001 PARIS

## Description

The present invention relates to a gear transmission comprising a first and a second cooperating gear wheel, wherein the second gear wheel is arranged in such a manner that its axis forms an angle to the axis of the first gear wheel and during operation makes a conical pendulum movement and wherein one of said first and second gear wheels is rotatable and the other one of said two gear wheels is locked against rotation, whereby a rotational meshing wave during operation is generated between said first and said second gear wheels, the second gear wheel forming the input gear wheel of the toothed gear transmission. Further the first and second gear wheels are journalled on a common shaft. The gear transmission comprises bearing means arranged radially outwardly of the common shaft. Gear transmission of this type are known as nutation gears and are described e.g. in SE-A-418525 and in GB-A-2011016. In these earlier known toothed transmission gears the input and output shafts are independently supported. This results in disruptions in the power transmission of the toothed transmission gear and a temperature dependent meshing of teeth.

Another gear transmission of this general type is disclosed in US-A-3532005. In this transmission one gear wheel is flexible and brought into engagement with the other gear wheel by means of an annular member having a ramp portion.

A further gear transmission comprising the features of the preamble of claim 1 is disclosed in JP-A-58128549. In this transmission the gear wheels are eccentrically located on the nutation axis to provide a finishing of the tooth faces during operation of the gear transmission.

A still further type of gear transmission is shown in DE-A-3715834. In this gear transmission the two cooperating gear wheels are journalled in a common housing. It is indicated that the transmission might be used in a nutation gear by rotating the housing around bearing surrounding the housing. In such a design very large masses are caused to swung.

Further, the journalling arrangement of the housing appears to become very complicated.

A purpose of the present invention is to provide a toothed transmission gear of the type in question with an axially relieved gear transmission.

Another purpose of the invention is to provide a toothed transmission gear of the type in question with a gear transmission free from play.

A further purpose of the invention is to provide a toothed transmission gear of the type in question wherein the flank clearance is adjustable.

Further a purpose of the invention is to provide a toothed transmission gear of the type in question with temperature independent gear meshing.

Other purposes of the invention is to provide a toothed transmission gear with high gear ratio, high efficiency and with a few components only.

These and other purposes of the invention have been achieved in that the invention has been given the features defined in the accompanying claims.

The invention hereinafter will be further described with reference to the accompanying drawings, in which is shown an embodiment for exemplifying purpose. This embodiment is only intended to illustrate the invention, which may be modified within the scope of the invention.

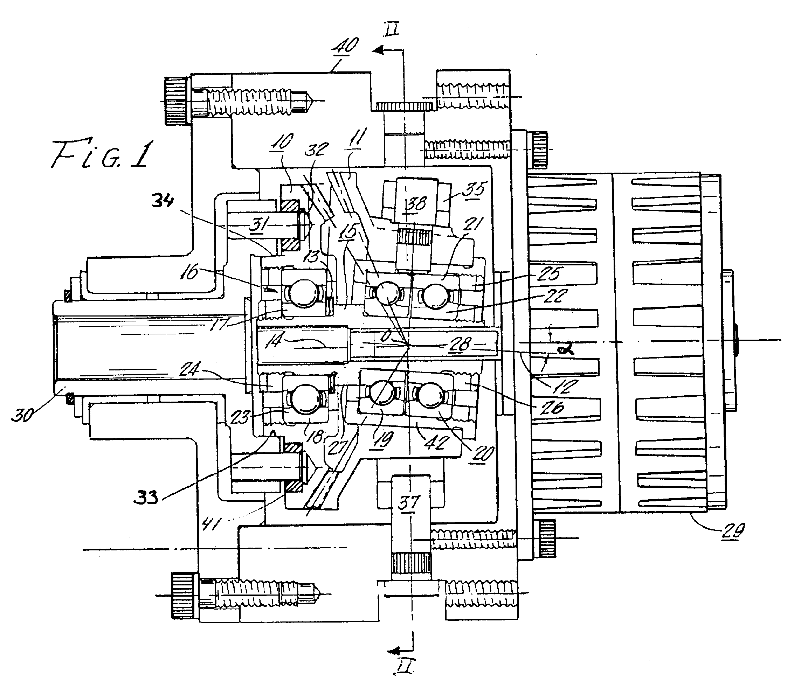

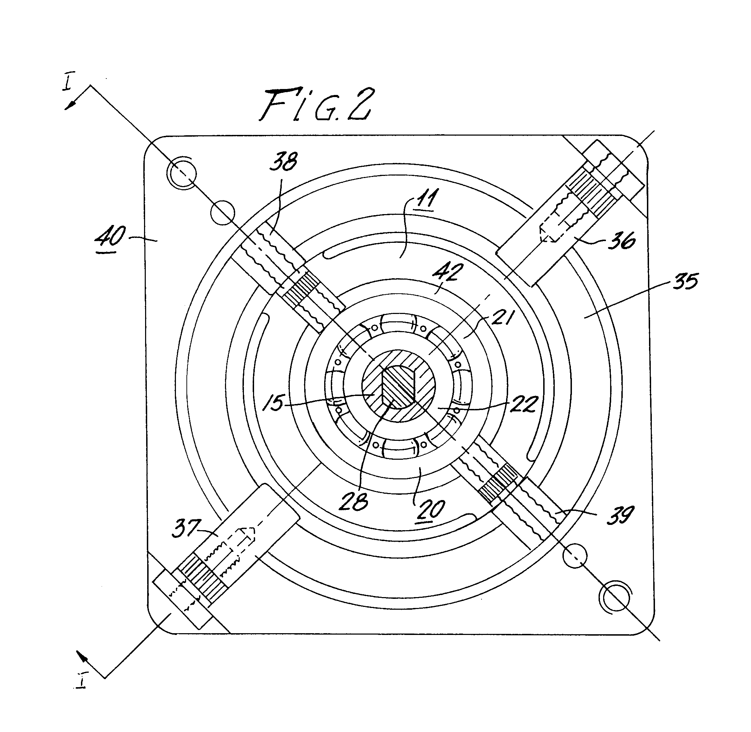

In the drawings Fig. 1 shows a section along the line I-I in Fig. 2 through an embodiment of a toothed transmission gear according to the invention.

Fig. 2 shows a section along line II-II in Fig. 1.

The toothed transmission gear shown in Fig. 1 and 2 incorporates two cooperating gear wheels 10, 11. The axis 12 of the gear wheel 11 forms an angle $\alpha$ with the axis 14 of the gear wheel 10. The gear wheel 10 is rotatably supported in a bearing 16 on a shaft 15, the center axis of which coincides with the axis of the gear wheel 10.

The gear wheel 11, herebelow referred to as the pendulum gear wheel, is locked against rotation relative to the gear box 40 in a manner to be further described hereinafter. The gear wheel 11 furthermore is mounted via bearings 19, 20 on an oblique surface on the shaft 15, which surface forms said angle $\alpha$ with the axis 14. The distinguishing feature of the invention is that the gear wheels 10, 11 are supported on the shaft 15 which is common to them both.

The shaft 15 is designed with a centre hole adapted to receive a drive shaft 28 from a motor 29. The drive shaft 28 thereby is non-rotatably but axially displaceably arranged in said centre hole. For achieving the non-rotatable connection, the drive shaft 28, as shown in Fig. 2, may be round and may have faced surfaces intended to cooperate with corresponding plane surfaces in the centre hole. The drive shaft 28 of course can be designed in another way for reducing the shaft 15, e.g. as a splined shaft.

The gear wheel 11 is axially arrested and locked against rotation by means of the pendulum suspension incorporating a gimbal 35. The gimbal 35 is rotatable about two diametrically opposed shaft journals 36, 37 affixed to the gear box 40. Two further shaft journals 38, 39 are affixed to the gimbal 35 perpendicularly to the shaft journals 36, 37. These two diametrically opposed shaft journals 38, 39 support the gear wheel 11 in a pivotable manner. The entire pendulum suspension thus is axially arrested and locked from rotation.

The gear wheels 10, 11 are tapering, whereby pendulum gear wheel 11 has a concave shape and gear wheel 10 has a convex shape. The taper points of the two taper gear wheels coincide in a point 0, which is also the centre for the gimbal suspension of the pendulum gear wheel 11, i.e. the supporting centre of the gimbal suspension coincides in point 0. The oblique pendulum axis 12 furthermore intersects the driving shaft 28 also in point 0.

At rotation of the drive shaft 28 the contact of gear wheel 11 with gear wheel 10 is successively displaced around the associated gear rim, when the axis 12 of the gear wheel 11 makes a tapering pendulum motion (nutation), i.e. a surrounding rotational meshing wave is generated between the gear wheels 10, 11. If the gear wheels 10, 11 have different number of teeth, one of the gear wheels thereby will rotate relative to the other at a slower rotational speed than the rotational speed of the drive shaft 28. The slower rotational speed is taken out on the shaft 14 of the gear wheel 10 in the embodiment shown. If the gear wheel 10 is designed to be locked against rotation the slower rotational speed on the other hand can be taken out on element 40, which is then designed as a rotatable driving device.

Pedulum shaft or nutation toothed transmission gears operate according to a very simple basic principle and usually have only two gear wheels forming part of the transmission. Double sided nutation gear wheels occur but they involve rather difficult complications. The two gear wheels forming part of the transmission gear have positive, i.e. external thread flanks and may therefore be considered equal to normal spur gearings. This provides for a high efficiency in the gear transmission and is superior to e.g. internal and external gear meshings in planetary gearings of different designs, which have inferior gear generating ratios.

In the embodiment of a toothed transmission gear according to the invention described above the shaft 15 is driven by the motor 29, which e.g. may be a stepping motor. Only the shaft 15 and the inner race rings of the bearings 16, 19, 20 rotate at the input speed of the totthed transmission gear, which results in small mass rotations. This is important particularly at stepping motor drives with never ceasing repetions of start and stop motions. As the pendulum gear wheel 11 is locked against rotation in the gear box 40 by means of the gimbal suspension 35, 36, 37, 38, 39 the output gear wheel 10 is urged to rotate at the difference between the number of teeth of the gear wheels 10, 11 for every "wave revolution" (motor revolution). The gear change U will be

$$U = \frac{Z_{10}}{Z_{11} - Z_{10}}$$

wherein $Z_{10}$ is the number of teeth of the output gear wheel 10 and $Z_{11}$ is the number of teeth of the input gear wheel 11.

As the pendulum gear wheel 11 has more teeth than the output gear wheel 10 the output rotational direction will be opposed to the input rotational direction, i.e. the transmission gear will be a so called negative transmission gear.

It is possible with the same standard gear box to designe the gear construction shown in Fig. 1 and 2 with gear changes in accordance with the following table

| Real module | $Z_{11}$ | $Z_{10}$ | Gear ratio |
|---|---|---|---|
| 1 | 52 | 50 | 25:1 |
| 0,8 | 62 | 60 | 30:1 |
| 0,6 | 82 | 80 | 40:1 |
| 1 | 51 | 50 | 50:1 |
| 0,8 | 61 | 60 | 60:1 |
| 0,6 | 81 | 80 | 80:1 |
| 0,5 | 101 | 100 | 100:1 |
| 0,4 | 121 | 120 | 120:1 |

In earlier known pendulum tootherd transmission gears the surrounding rotating gear meshing and its power take-up has meant a big technical difficulty. Thanks to the shaft 15 common for the gear wheels 10, 11 according to the invention it has become possible to control the course of power. As the input drive shaft 28 is axially displacable in the bore of the shaft 15, the gimbal suspension will become axially relieved from the drive side.

The shaft 15 also makes possible a load-relief of the gimbal suspension from output forces, whereby the only function of the gimbal suspension will be to arrest the gear transmission against rotation and axial movement and thereby to transfer output drive moment. In the embodiment illustrated the gear wheel 10 is designed with a plurality of blind holes 32, which receive driving pins 31 affixed to the output shaft 30 for carrying over output drive moment. Bushings 41, e.g. O-rings may be provided in the blind holes 32. The rigidity and/or the fitting-in dimensions of said bushings are preferably chosen with regard to the desired rigidity of the transmission. In order to control the gear wheels 10, 11, i.e. for taking up their dead weight, the gear wheel 10 and the output drive shaft 30 are designed with cooperating guiding surfaces 33, 34. The drive shaft 30 thus is axially movable relative to the gear wheel 10, whereby the construction is axially relieved also from the output side. The shaft 30 is provided with its own bearings of appropriate design.

The blind holes 32 may be filled with gas or fluid if damping is desired or they may be provided with ventholes for avoiding pumping effects caused by the surrounding rotary gear meshing of the toothed transmission gear.

Another characterizing feature of the gear unit according to the present invention is that it incorporates means for adjustment of the flank clearance of the cooperating gear wheels 10, 11 or for preloading the gear meshing of these gear wheels. Those features in the embodiment illustrated are shims or precision washers 13, which are provided between the inner race ring 17 of the rolling bearing 16 and a shoulder 27 on the shaft 15. The inner race ring 17 is locked to the shaft 15 by means of an eye nut 24. The outer race ring 18 of the bearing 16 is locked in the gear wheel by means of an eye nut 23.

The inner race rings 22 of the bearings 19, 20 supporting the gear wheel 11 is locked against the shoulder 27 by means of an eye nut 26, which is screwed onto the shaft 15. The outer race rings 21 of the bearings 19, 20 are held in the gear wheel 10 by means of an eye nut 25 screwed into the gear wheel 10.

A further characterizing feature of the gear unit according to the present invention is that it is possible to achieve a temperature independent gear meshing. As shown in Fig. 1 a temperature increase in the shaft 15 will result in an increase of the clearance at the gear meshing between the gear wheels 10, 11. A temperature increase in the gear wheels 10, 11 on the other hand will cause a reduction of said clearance. By appropriate design of the shaft 15 and the gear wheels 10, 11 said increase can be compensated by means of said reduction, whereby the clearance or the grip in the gear meshing can be maintained mainly unaltered independent of the temperature at the shaft 15 and at the gear wheels 10, 11. Temperature decrease in the shaft 15 and in the gear wheels 10, 11 in a corresponding manner will cause an decrease or increase resp. of the clearance at gear meshing between the gear wheels 10, 11.

For the purpose of reducing the occurance of mass oscillation forces the pendulum gear wheel 10 may be made in plastic material, whereby a steel sleeve 42 is preferably pressed into the gear wheel for housing the bearings 19, 20.

Instead of having a centre hole, the shaft 15 can be provided with an elongated stud, which in suitable manner is brought into torque transferring engagement with motor 29.

As a toothed transmission gear designed in accordance with the invention can be made entirely clearance-free by biasing the gear meshing it is possible to use the toothed transmission gear with advantage within such fields as measuring practice, steering technique, missile engineering, weapon engineering and for actuators. Due to its simplicity such a toothed transmission unit is inexpensive, whereby it can also be useful in other, less demanding applications.

Due to the fact that the toothed transmission gear according to the invention is axially relieved from load, no axial forces occuring on the input or output side of the toothed transmission gear can give rise to obstructions of the power transfer of the toothed transmission gear. The gear meshing furthermore will be independent of temperature variations in the elements forming part of the toothed transmission gear.

## Claims

1. A gear transmission comprising a first (10) and a second (11) cooperating gear wheel, wherein the second gear wheel (11) is arranged in such a manner that its axis (12) forms an angle ($\alpha$) to the axis (14) of the first gear wheel (10) and during operation makes a conical pendulum movement and wherein one of said first (10) and second (11) gear wheels is rotatable and the other one of said two gear wheels is locked against rotation, whereby during operation a rotational meshing wave is generated between said first (10) and said second (11) gear wheel, the second gear wheel forming the input gear wheel of the gear transmission, said first and second gear wheels being journalled on a common shaft (15), the gear transmission further comprising bearing means (16, 19, 20) arranged radially outwardly of the common shaft (15), **characterized**
in that the taper apeces of the first (10) and the second (11) gear wheels coincide in one point (0) located on the centre of the common shaft (15), and in that all interconnecting gear forces are transmitted to the common shaft (15), Thereby creating a proper rolling contact in the gear engagement.

2. A gear transmission according to claim 1,
**wherein**
the gear transmission comprises means (13) for adjustment of the flank clearance of the cooperating gear wheels (10, 11) or for pre-loading of the gear meshing of said gear wheels.

3. A gear transmission according to claim 2,
**wherein**
the first gear wheel (10) is supported on the common shaft (15) by means of a first rolling bearing (16), and that said adjusting means comprises shims (13) or a precision washer provided between the inner race ring (17) of the first rolling bearing (16) and a shoulder (27) on said common shaft (15).

4. A gear transmission according to claim 3,
**wherein,**
the inner race ring (17) of the first rolling bearing (16) is locked against said shoulder (27) by means of a first locking member (24), such as a nut.

5. A gear transmission according to claim 3 or 4,
**wherein,**
the second gear wheel (11) is supported on the common shaft (15) by means of at least one second rolling bearing (20), the inner race ring (22) of said second rolling bearing being directly or indirectly locked against the shoulder (27) on the common shaft (15) by means of a second locking member (26), such as a nut.

6. A gear transmission according to any of the preceeding claims,
**wherein,**
a drive shaft (28) from a motor (29) is non-rotatably but axially displaceably connected to the common shaft (15) at the end thereof supporting the second gear wheel (11).

7. A gear transmission according to claim 6,
**wherein,**
the common shaft (15) is designed with a centre bore for receiving the drive shaft (28), whereby means, such as planar surfaces, wedges or splines, are provided in the centre bore for drivingly connection of the common shaft (15).

8. A gear transmission according to any of the preceeding claims,
**wherein,**
the first gear wheel (10) is non-rotatably but axially displaceable connected to the output shaft (30) of the gear transmission.

9. A gear transmission according to claim 8,
**wherein,**
one of the output shaft (30) and the first gear wheel (10) is designed with driving pins (31) arranged to be received in bores (32) in the other one of output shaft (30) and first gear wheel (10) and that the output shaft (30) and the first gear wheel (10) are designed with cooperating internal (33) and external (34) guiding surfaces, respectively.

10. A gear transmission according to any of the preceeding claims,
**wherein,**
the second gear wheel (11) is axially arrested and locked against rotation by means of a pendulum suspension incorporating a gimbal (35) surrounding the second gear wheel (11), which gimbal is pivotable about first and second diametrically opposed bearing journals (36, 37) fixed to the gear housing (40), whereby the gimbal (35) is provided with third and fourth bearing journals (38, 39) arranged perpendicularly to the first and second bearing journals, and adapted to support pivotably the second gear wheel (11).

**Patentansprüche**

1. Zahnradgetriebe mit einem ersten (10) und einem damit zusammenwirkenden zweiten (11) Zahnrad, welches derart angeordnet ist, daß seine Achse (12) einen Winkel ( ) mit der Achse (14) des ersten Zahnrads (10) bildet, und während des Betriebs eine konische Pendelbewepung ausführt, wobei eines der beiden Zahnräder (10, 11) drehbar und das andere gegen Drehung gehalten ist, wodurch während des Betriebs ein umlaufender Kämmeingriff zwischen dem ersten Zahnrad (10) und dem das Eingangszahnrad des Getriebes bildenden zweiten Zahnrad (11) erzeugt wird, und wobei das erste und das zweite Zahnrad auf einer pemeinsamen Welle (15) gelagert sind und das Zahnradgetriebe radial außerhalb der gemeinsamen Welle (15) angeordnete Lager (16, 19, 20) aufweist, **dadurch gekennzeichnet,** daß die Scheitelpunkte der Kegel des ersten (10) und des zweiten (11) Zahnrads in einem auf der Mittellinie der gemeinsamen Welle (15) liegenden Punkt (0) zusammenfallen und daß alle Kräfte des Zahneingriffs auf die gemeinsame Welle (15) übertragen werden und dadurch ein vorbestimmter Abrollkontakt im Zahneingriff erhalten wird.

2. Zahnradgetriebe nach Anspruch 1, **dadurch gekennzeichnet,** daß es Mittel (13) zur Einstellung des Flankenspiels der zusammenwirkenden Zahnräder (10, 11) oder zur Vorbelastung des Zahneingriffs der Zahnräder aufweist.

3. Zahnradgetriebe nach Anspruch 2, **dadurch gekennzeichnet,** daß das erste Zahnrad (10) mittels eines ersten Wälzlagers (16) auf der gemeinsamen Welle (15) gelagert ist, und daß die Einstellmittel Beilagscheiben (13) oder eine Passscheibe aufweisen, die zwischen dem inneren Laufring (17) des ersten Wälzlagers (16) und einer Schulter (27) an der gemeinsamen Welle (15) eingesetzt sind.

4. Zahnradgetriebe nach Anspruch 3, **dadurch gekennzeichnet,** daß der innere Laufring (17) des ersten Wälzlagers (16) mittels eines ersten Befestigungsglieds (24), wie z. B. einer Mutter, an der Schulter (27) festgelegt ist.

5. Zahnradgetriebe nach Anspruch 3 oder 4, **dadurch gekennzeichnet,** daß das zweite Zahnrad (11) mittels wenigstens eines zweiten Wälzlagers (20) auf der gemeinsamen Welle (15) gelagert ist und der innere Laufring (22) des zweiten Wälzlagers mittels eines zweiten Befestigungsglieds (26), wie z. B. einer Mutter, direkt oder indirekt an der Schulter (27) der gemeinsamen Welle (15) festgelegt ist.

6. Zahnradgetriebe nach einem der vorhergehenden Ansprüche, **dadurch gekennzeichnet,** daß die Abtriebswelle (28) eines Motors (29) undrehbar, aber axial verschieblich mit der gemeinsamen Welle (15) an deren das zweite Zahnrad (11) tragenden Ende verbunden ist.

7. Zahnradgetriebe nach Anspruch 6, **dadurch gekennzeichnet,** daß die gemeinsame Welle (15) mit einer zentralen Bohrung zur Aufnahme der Abtriebswelle (28) versehen ist und Mittel, wie z. B. ebene Flächen, Keile oder Stifte in der zentralen Bohrung für die Antriebsverbindung der gemeinsamen Welle (15) vorgesehen sind.

8. Zahnradgetriebe nach einem der vorhergehenden Ansprüche, **dadurch gekennzeichnet,** daß das erste Zahnrad (10) undrehbar, aber axial verschieblich mit der Ausgangswelle (30) des Zahnradantriebes verbunden ist.

9. Zahnradgetriebe nach Anspruch 8, **dadurch gekennzeichnet,** daß die Ausgangswelle (30) oder das erste Zahnrad (10) mit Mitnehmerstiften (34) versehen ist, die in Bohrungen (32) in dem jeweils anderen Teil aufgenommen sind, und daß die Ausgangswelle (30) und das erste Zahnrad (10) jeweils mit zusammenwirkenden inneren (33) bzw. äußeren (34) Führungsflächen ausgebildet sind.

10. Zahnradgetriebe nach einem der vorhergehenden Ansprüche, **dadurch gekennzeichnet,** daß das zweite Zahnrad (11) axial und gegen Drehung gehalten ist mittels einer Pendelhalterung, welche einen das zweite Zahnrad (11) umgebenden kardanischen Ring (35) aufweist, der in diametral gegenüberliegenden ersten und zweiten Drehlagern (36, 37), die am Getriebegehäuse (40) festgelegt sind, schwenkbar und selbst mit dritten und vierten Drehlagern (38, 39) versehen ist, die senkrecht zu den ersten und zweiten Drehlagern angeordnet sind und das zweite Zahnrad (11) verschwenkbar tragen.

## Revendications

1. Transmission à engrenages comprenant une première (10) et une seconde (11) roues dentées coopérantes, dans laquelle la seconde roue dentée (11) est disposée de manière que son axe (12) forme un angle ($\alpha$) avec l'axe (14) de la première roue dentée (10) et, pendant le fonctionnement, effectue un mouvement pendulaire conique, et dans laquelle une desdites première (10) et seconde (11) roues dentées peut tourner et l'autre des deux roues dentées précitées est bloquée de manière à ne pas pouvoir tourner, grâce à quoi pendant le fonctionnement une oscillation tournante d'engrènement est engendrée entre la première (10) et la seconde (11) roue dentée, la seconde roue dentée formant la roue dentée d'entrée de la transmission à engrenages, lesdites première et seconde roues dentées étant supportées de façon tournante par un arbre commun (15), la transmission à engrenages comprenant en outre, des moyens formant paliers (16, 19, 20) disposés radialement à l'extérieur de l'arbre commun (15),
caractérisé
en ce que les sommets des configurations coniques de la première (10) et de la seconde (11) roues dentées coïncident en un point (O) situé au centre de l'arbre commun (15) et en ce que toutes les forces des roues dentées en prise sont transmises à l'arbre commun (15) en créant de cette manière un contact de roulement approprié dans l'engrènement des roues dentées.

2. Transmission à engrenages selon la revendication 1,
dans laquelle
la transmission à engrenages comprend des moyens (13) pour le réglage du jeu de dégagement des dents des roues dentées coopérantes (10, 11) ou pour la précontrainte de l'engrènement des dents des roues dentées.

3. Transmission à engrenages selon la revendication 2,
dans laquelle
la première roue dentée (10) est supportée par l'arbre commun (15) au moyen d'un premier roulement (16), et lesdits moyens de réglage comprennent des cales (13), ou une rondelle de précision, disposées entre la bague intérieure (17) du premier roulement (16) et un épaulement (27) de l'arbre commun (15).

4. Transmission à engrenages selon la revendication 3,
dans laquelle,
la bague intérieure (17) du premier roulement (16) est bloqué contre l'épaulement (27) au moyen d'un premier élément de blocage (24), tel qu'un écrou.

5. Transmission à engrenages selon la revendication 3 ou 4,
dans laquelle,
la seconde roue dentée (11) est supportée par l'arbre commun (15) au moyen d'au moins un second roulement (20), la bague intérieure (22) dudit second roulement étant bloqué directement ou indirectement contre l'épaulement (27) de l'arbre commun (15) au moyen d'un second élément de blocage (26), tel qu'un écrou.

6. Transmission à engrenages selon l'une quelconque des revendications précédentes,
dans laquelle,
un arbre d'entraînement (28) s'étendant depuis un moteur (29) est relié de façon non tournante mais déplaçable axialement à l'arbre commun (15) à l'extrémité de ce dernier qui supporte la seconde roue dentée (11).

7. Transmission à engrenages selon la revendication 6,
dans laquelle,
l'arbre commun (15) est conçu avec un alésage ou trou central destiné à recevoir l'arbre d'entraînement (28), des moyens, tels que des surfaces planes, des clavettes ou des cannelures, sont présentes dans l'alésage central en vue d'une liaison d'entraînement de l'arbre commun (15).

8. Transmission à engrenages selon l'une quelconque des revendications précédentes,
dans laquelle,
la première roue dentée (10) est calée de façon non tournante mais déplaçable axialement sur l'arbre de sortie (30) de la transmission à engrenages.

9. Transmission à engrenages selon la revendication 8,
dans laquelle,
l'un de l'arbre de sortie (30) et de la première roue dentée (10) comporte des doigts d'entraînement (31) disposés de manière à être reçus dans des trous (32) de l'autre de cet arbre de sortie (30) et de cette première roue dentée (10), et l'arbre de sortie (30) ainsi que la première roue dentée (10) comportent, respectivement, des surfaces de guidage coopérantes internes (33) et externes (34).

10. Transmission à engrenages selon l'une quelconque des revendications précédentes,
dans laquelle,
la seconde roue dentée (11) est immobilisée axialement et est empêchée de tourner au moyen d'une suspension pendulaire incorporant un anneau de cardan (35) entourant la seconde roue dentée (11), cet anneau de cardan pouvant pivoter autour de premier et second tourillons diamétralement opposés (36, 37) fixés au carter (40), l'anneau de cardan (35) étant pourvu de troisième et quatrième tourillons (38, 39) disposés perpendiculairement aux premier et second tourillons, et adaptés pour supporter de façon pivotante la seconde roue dentée (11).

Fig. 1

FIG.2